# EUROPEAN PATENT SPECIFICATION

(11) **EP 1 055 538 B1**
(45) Date of publication and mention of the grant of the patent: **22.12.2004**
(21) Application number: 00830376.0
(22) Date of filing: 24.05.2000
(51) Int. Cl.: B60J 7/06, B60J 5/04

(54) **Folding cover for trucks, detachable by means of a command mechanism that allows the sides to be opened**
Faltbare Abdeckung für Kraftfahrzeuge, lösbar mittels eines Steuermechanismus, der erlaubt, die Seiten zu öffnen
Bâche repliable pour camions, détachable par moyens d'un mécanisme de commande qui permet d'ouvrir des côtés

(30) Priority: 28.05.1999 IT BS990050
(43) Date of publication of application: 29.11.2000
(73) Proprietor: Maraggi, Ditta Giuseppe, 25080 Padenghe Sul Garda (Brescia) (IT)
(72) Inventor: Maraggi, Giuseppe, 2508 P Padenghe Sul Garda (Brescia) (IT)
(74) Representative: Crippa, Paolo Ernesto

(56) References cited:
- EP-A- 0 391 767
- US-A- 4 215 897
- US-A- 5 080 423

## Description

This invention concerns a cover equipped with a motorised command mechanism, applicable, in particular, to trucks whose bodies have sides that can be opened from the top or bottom and lowered, so that the material in question can be unloaded from the side.

There already exists a truck cover of the type mentioned above, consisting of a tarpaulin carried on horizontal ribs and with a command mechanism for stretching and retracting it, or for re-folding the cover longitudinally above the sides walls of the truck body. The command mechanism consists of a rotating shaft, driven by a motor or operated manually by a crank, placed cross-wise in the front part of the truck body, a first pair of pulleys fixed to either end of said shaft, a second pair of pulleys mounted on the sides at the rear of the side walls of the truck body, and two tow ropes, each running over two aligned pulleys, and along which the ends of the cover ribs are guided, except for the ends of the rib farthest from the shaft, which are fixed to and drawn by said ropes. The whole operates in such a way that the cover is pulled and spread over the body when the shaft rotates in one direction, and retracted in order to reveal the body when the shaft rotates in the other direction. Such a folding cover is known from US 5 080 423.

However, given the connection of the ribs to the tow ropes and the fastening of the front pulleys to the command shaft and the rear pulleys to the body, the cover cannot be detached from the mechanism except by dismantling the components. In effect, even when retracted, the cover remains connected, at least via the tow ropes and the rear pulleys, to the body sides, hindering or even making impossible the opening of the sides in order to unload the material laterally. This occurs whether the sides open from the bottom or, more probably, from the top.

The aim of this invention is to overcome such an inconvenience, creating the conditions for a free and easy opening of the side walls of the truck body, even when the body is covered as in the way described above.

Another aim is to propose a device for allowing a cover of this type to be detached from the relative command mechanism and, correspondingly, from the lateral sides of the truck body equipped with such a cover, at the moment of unloading.

A further aim of this invention is to make improvements to the command mechanism of a cover of the above-mentioned type for easy use even on trucks with sides that can be opened and lowered down only on one side.

Said aims and the evident advantages that derive therefrom are obtained with a truck cover according to claim 1.

Further details of the invention will become evident from the following description, where reference is made to the enclosed drawings, which are indicative but not binding, and where:
Fig. 1 shows a plan of the cover on a truck body;
Fig. 1a shows a view of the end of the rib, with a side partially open;
Fig. 2 shows a perspective of the coupling system of the rotating shaft with a front pulley, in the coupling position;
Fig. 3 shows a similar view to that in Fig. 2, but with the coupling system uncoupled;
Fig. 4 shows the sliding means for connecting one end of a rib to a tow rope;
Fig. 5 shows a similar view to that of Fig. 4, but with the rib detached from the tow rope; and
Fig. 6 shows the coupling of one end of the last rear rib of the cover with the tow rope.

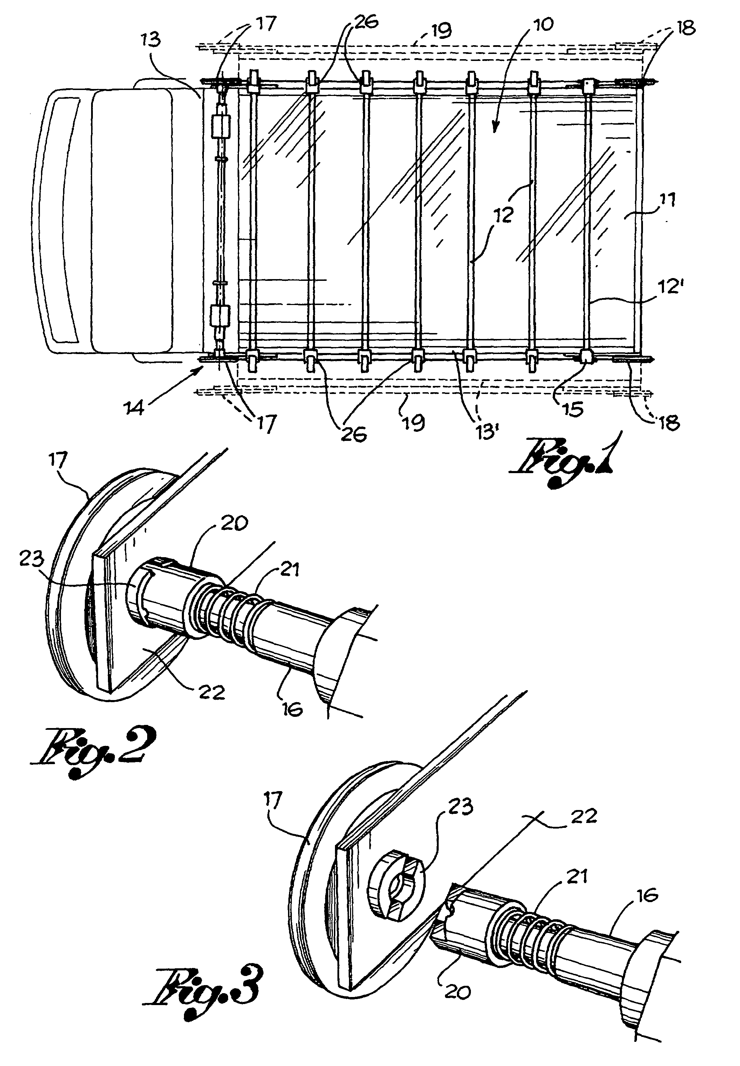

In said drawings, the cover is indicated with 10 and is formed by a tarpaulin 11 and support ribs 12. Said cover 10 is used on the body 13 of a truck, where it is stretched and retracted and folded by means of a command mechanism 14 placed in the front part, and on the lateral sides 13' of the truck body - Fig. 1 - which can be opened from the side.

The support ribs 12 are placed cross-ways on the body and at the end of each of them there is fixed a "C" - shaped element 15, which opens outwards.

The command mechanism 14 consists of a horizontal rotating shaft 16, a pair of front pulleys 17, a pair of rear pulleys 18 and two tow ropes 19.

The rotating shaft 16 is supported across the front part of the truck body 13 and equipped at both ends with a coupling element 20, for example, front teeth.

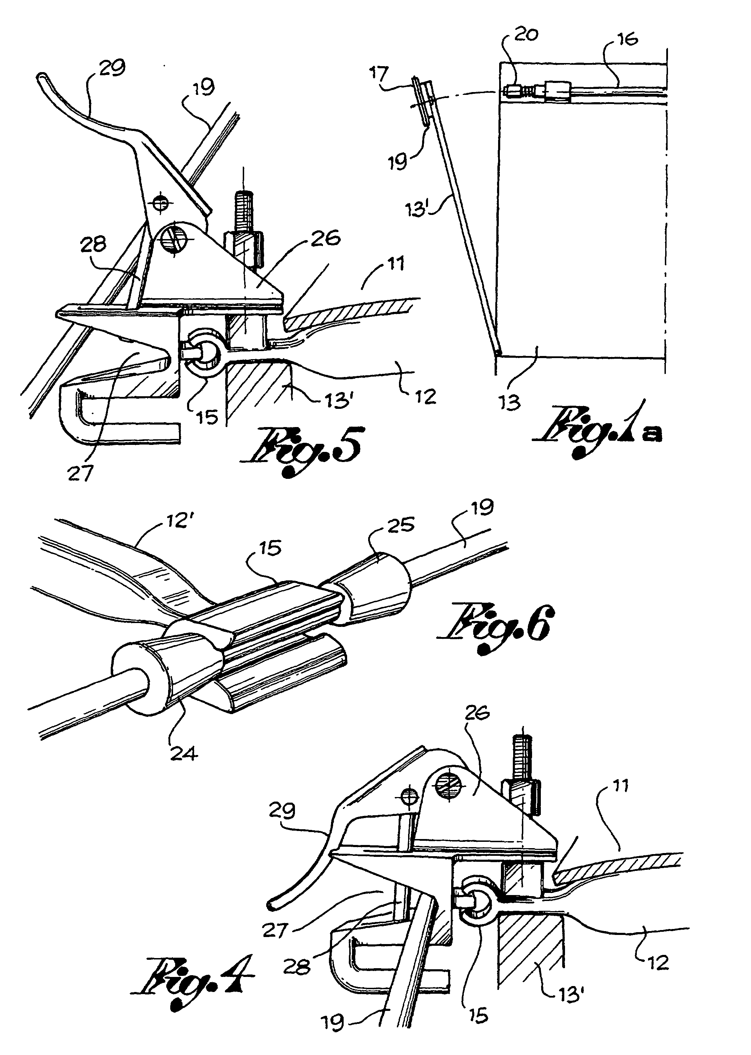

Each coupling element 20 is ideally capable of moving axially - if only to a limited degree - down the shaft 16, where it is resisted by a spring 21 - Figs 2 and 3 - which tends to push it back towards its respective extremity of the shaft.

The front pulleys 17 are applied to the sides of the side walls 13' of the truck body, one for each wall and each with a support 22 that extends forward beyond the wall itself as far as the shaft 16. Each front pulley 17 has a spider with a coupling means 23 which matches the coupling element 20 on the respective end of the shaft 16, so that the front pulleys can join and rotate together with the shaft itself, when this is driven by a gear-motor or manually using a crank.

The rear pulleys 18 are mounted on a horizontal axis on the sides of the side walls 13' of the truck body, at the back of the latter.

Both the front pulleys 17 and the rear ones 18 are at the same level as the top of the side walls 13', and each tow rope 19 is drawn over and moved by two aligned pulleys 17, 18 in such a way as to extend along one side of the respective side wall, with its upper branch practically on the same plane as the upper edge of the side wall itself.

The front end of the cover is fixed to the front side of the truck body.

The ends of all the ribs 12 of the cover 10 are connected to the tow ropes 19 in a detachable way.

In particular, the ends of the last rear rib 12', the farthest from the shaft 16, are held and drawn by the ropes 19 in such a way as to follow their movements and, thereby, causing the cover to stretch or fold up, according to the rotation of the shaft 16. To that end and as shown in Fig. 6, the "C"-shaped elements at the ends of said rear rib 12' are designed to receive the ropes 19 through their side opening. Then, two wedges 24, 25, fixed to each rope just before and after the "C"-shaped element, coupling with it, act upon it and draw said rib backwards or forwards, respectively, according to the movements of the rope for stretching and folding the cover. Likewise, each "C"-shaped element can be equipped with a pivot pin - not shown - to prevent detachment from the respective rope, the pivot pin being removable, anyway, to allow said rib to be detached from the rope.

The ends of all the remaining ribs 12 of the cover are designed to couple with the ropes 19 and run along them, but, they too, in a detachable way. So, at the end of each of these ribs there is fixed, by whatever system is appropriate - Figs 2 and 3, a clamp 26 with a lateral aperture 27 facing outwards, designed to receive the respective rope 19 and closable with a pivot pin 28 to prevent its detachment from the rope. The pivot pin, however, is movable, for example, by means of a lever 29 connected to it and hinged to the clamp, from a position where the aperture 27 is closed to one where it is open, in order to detach each rib from the rope, as required.

Practically, the front and rear pulleys 17, 18 with the ropes 19 that are wound around them, always remain fastened to the side walls of the truck body, following the opening and closing movements, while the command shaft 16 and the cover always remain above the truck body. When the side walls are closed, the front pulleys 17 are coupled to the command shaft 16 by means of the coupling elements, and the cover ribs are connected to the ropes. In this way, the cover can be stretched or folded on the truck body. When it is necessary to open one or the other of the side walls of the truck body, the cover is folded back, then acting upon the pivot pins 28 in the opening direction, the rib clamps are released from the rope on the side of the truck to be opened, and the side wall may be opened by uncoupling the front pulley from the command shaft and detaching the rope from the rib clamps.

Then, when the side wall is closed, the front pulley will automatically couple with the shaft and the rope will be held in the rib clamps, by means of the pivot pins which move into the closed position.

## Claims

1. Folding cover for trucks with side walls (13') that open for unloading to the side, consisting of a tarpaulin (11), carried on ribs (12, 12') and a command mechanism (14) for stretching and retracting the cover horizontally above the side walls, and where said mechanism includes a rotating shaft (16), driven by a motor or manually with a crank, located cross-wise in the front part of the truck body, a first pair of pulleys (17) placed at either end of said shaft, a second pair of pulleys (18) mounted on the sides at the rear of the side walls (13') of the truck body, and two tow ropes (19), each drawn over two aligned pulleys, along which the ribs (12) of the cover are guided and run, except for the ends of the farthest rib (12') from the rotating shaft, which are held and drawn by said ropes according to the rotation of said shaft in one direction or the other, **characterised by** the fact that each of the front pulleys (17) is mounted (22) on its respective side wall of the truck body and can be coupled or uncoupled (20, 23) from a corresponding end of said rotating shaft (16), and by the fact that the ends of the ribs (12, 12') are connected in a detachable way to each tow rope (19), said front pulleys being coupled with the rotating shaft (16) and the ribs connected to the tow ropes when the side walls (13') are closed, the front pulleys uncoupling from said rotating shaft (16) and the ribs detaching and coming away from said ropes when the side walls are open.

2. Cover for trucks according to claim 1, in which the front and rear pulleys (17, 18), together with the tow ropes (19) that are drawn over them, are mounted on and follow the opening and closing movements of the side wall (13') of the truck body, and the rotating shaft (16) and the cover remain above the truck body when one or the other, or both, side walls are lowered.

3. Cover for trucks according to the previous claims, in which there is a coupling element (20) at either end of the rotating shaft (16) and in which each front pulley (17) has a spider with coupling means (23), designed to match with said coupling element (20) on the rotating shaft (16).

4. Cover for trucks according to claim 3, in which said coupling element (20) on the rotating shaft (16) can move axially and is resisted by a spring (21), which tends to push it constantly into the coupling position with the respective front pulley.

5. Cover for trucks according to the previous claims, in which each front pulley (17) is mounted on a support (22) that extends forward beyond the side wall (13') to which said pulley is applied.

6. Cover for trucks according to the previous claims, in which each rib (12) is equipped at both ends with a clamp (26), as a means of fastening and releasing a tow rope, the rib (12') farthest from the rotating shaft (16) being attached separately to the ropes and affected by elements for pulling it horizontally above the side walls (13') of the truck body by the ropes only when the side walls are closed.

## Patentansprüche

1. Eine Faltabdeckung für LKWs mit Seitenwänden (13'), die für das seitliche Entladen zu öffnen sind, bestehend aus einer Plane (11), die von Streben (12, 12') und einem Steuermechanismus (14) für das horizontale Ausbreiten und Zurückziehen der Abdeckung über den Seitenwänden getragen wird. Der besagte Mechanismus umfasst eine Drehwelle (16), die durch einen Motor oder manuell mit einer Kurbel betrieben wird und quer in dem Frontbereich der LKW-Karosserie untergebracht ist, ein erstes Paar von Rollen (17), die sich an jedem Ende der besagten Welle befinden, ein zweites Paar von Rollen (18), die an den Seiten am Heck der Seitenwände (13') der LKW-Karosserie montiert sind, und zwei Schleppseile (19), von denen jedes über zwei ausgerichtete Rollen gespannt ist und an denen entlang die Streben (12) der Abdeckung geführt und bewegt werden. Ausgenommen sind die Enden der Strebe (12'), die am weitesten von der Drehwelle entfernt sind und die von den besagten Seilen festgehalten sowie, entsprechend der Drehrichtung der besagten Welle, in die eine oder die andere Richtung gezogen werden. Bezeichnend ist die Tatsache, dass jede der Frontrollen (17) an ihrer entsprechenden Seitenwand der LKW-Karosserie montiert ist (22) und an das entsprechende Ende der besagten Drehwelle (16) angekuppelt bzw. von diesem abgekuppelt (20, 23) werden kann. Weiterhin ist bezeichnend, dass die Enden der Streben (12, 12') auf abnehmbare Weise mit jedem der Schleppseile (19) verbunden sind, dass die besagten Frontrollen an die Drehwelle (16) angekuppelt und die Streben mit den Schleppseilen verbunden sind, wenn die Seitenwände (13') geschlossen sind, und die Frontrollen von der besagten Drehwelle (16) und den Streben gelöst und entfernt werden, wenn die Seitenwände geöffnet sind.

2. Eine, dem Anspruch 1 entsprechende, LKW-Abdeckung, bei der die Front- und Heckrollen (17, 18) zusammen mit den Schleppseilen (19) auf den Seitenwänden montiert sind und den Öffnungs- sowie Schließbewegungen der Seitenwände der LKW-Karosserie (13') folgen und die Drehwelle (16) sowie die Abdeckung oben auf der LKW-Karosserie verbleiben, wenn die eine oder andere bzw. beide Seitenwände hinuntergelassen werden.

3. Eine, dem vorangehenden Anspruch entsprechende, LKW-Abdeckung, bei der es an jedem Ende der Drehwelle (16) ein Kupplungselement (20) gibt und bei der jede Frontrolle (17) ein Drehkreuz mit Kupplungsgerät (23) besitzt, das so gestaltet ist, dass es zu dem besagten Kupplungselement (20) an der Drehwelle (16) passt.

4. Eine, dem Anspruch 3 entsprechende, LKW-Abdeckung, bei der sich das besagte Kupplungselement (20) an der Drehwelle (16) axial bewegen kann und diesem eine Feder (21) Widerstand leistet, die dazu neigt es konstant in die Kupplungsposition mit der entsprechenden Frontrolle zu drücken.

5. Eine, den vorangehenden Ansprüchen entsprechende, LKW-Abdeckung, bei der jede Frontrolle (17) auf einer Halterung (22) montiert ist, die über die Seitenwand (13') hinausragt, an der die besagte Rolle angebracht ist.

6. Eine, den vorangehenden Ansprüchen entsprechende, LKW-Abdeckung, bei der jede Strebe (12) an beiden Enden mit einer Krampe (26) für das Befestigen und Lösen eines Schleppseiles ausgestattet ist und die Strebe (12'), die am weitesten von der Drehwelle (16) entfernt ist, getrennt an den Seilen befestigt und durch Teile ergriffen wird, um sie, lediglich wenn die Seitenwände geschlossen sind, durch die Seile horizontal über die Seitenwände (13') der LKW-Karosserie zu ziehen.

## Revendications

1. Bâche pliable pour camions avec parois latérales (n13') ouvrantes pour déchargement latéral, composée d'une bâche (11) portée par des tiges (12 et 12') et d'un mécanisme de commande (14) pour tendre et replier la bâche horizontalement au-dessus des parois latérales, et où ledit mécanisme comprend un axe de rotation
(16) actionné par un moteur ou bien manuellement par une manivelle et placé perpendiculairement à l'avant du camion, une première paire de poulies (17) placée à chaque extrémité de l'axe, une seconde paire de poulies (18) montée sur les côtés des tiges à l'arrière des parois latérales (13') du camion et deux câbles de traction (19), chacun tiré par deux poulies en ligne, le long desquels les tiges (12) de la bâche sont guidées, excepté les extrémités de la tige la plus éloignée (12') de l'axe de rotation, qui sont tenues et tirées par lesdits câbles suivant la rotation dudit axe dans un sens ou dans l'autre, **caractérisée par le fait que** chacune des poulies avant (17) est montée (22) sur la paroi latérale correspondante de la carrosserie du camion et peut être couplée ou découplée (20, 23) de l'extrémité correspondante de l'axe de rotation (16), et **par le fait que** les extrémités des tiges (12, 12') sont reliées de façon amovible à chaque câble de traction (19), les poulies avant étant couplées à l'axe de rotation (16) et les tiges reliées aux câbles de traction lorsque les parois latérales (13') sont fermées, les poulies avant étant découplées de l'axe de rotation (16) et les tiges détachées des câbles lorsque les parois latérales sont ouvertes.

2. Bâche pour camions correspondant à la revendication 1, dans laquelle les poulies avant et arrière (17 et 18) ainsi que les câbles (19) qui sont tirés par elles, sont montés et suivent les mouvements d'ouverture et de fermeture des parois latérales (13') du camion, tandis que l'axe de rotation (16) ainsi que la bâche restent au-dessus de la carrosserie du camion lorsque l'une ou l'autre, ou bien les deux parois latérales sont abaissées.

3. Bâche pour camions correspondant aux revendications précédentes, dans laquelle il existe un élément de couplage (20) à chaque extrémité de l'axe de rotation (16) et où chaque poulie avant (17) possède un tourniquet avec des éléments de couplage (23), destinés à correspondre à l'élément de couplage. (20) sur l'axe de rotation (16).

4. Bâche pour camions correspondant à la revendication 3, dans laquelle l'élément de couplage (20) sur l'axe de rotation (16) peut bouger en suivant l'axe et est arrêté par un ressort (21), qui tend à repousser constamment l'élément en position couplée avec la poulie correspondante.

5. Bâche pour camions correspondant aux revendications précédentes, dans laquelle chaque poulie avant (17) est montée sur un support (22) s'avançant au-dessus de la paroi latérale (13') sur laquelle la poulie est appliquée.

6. Bâche pour camions correspondant aux revendications précédentes, dans laquelle chaque tige (12) est équipée à chaque extrémité d'une pince (26) servant à maintenir et relâcher un câble de traction, la tige (12') la plus éloignée de l'axe de rotation (16) étant fixée séparément aux câbles et dotée d'éléments permettant de pousser celui-ci avec les câbles horizontalement, au-dessus des parois latérales (13') du camion, uniquement lorsque les parois latérales sont fermées.
